# EUROPEAN PATENT APPLICATION

(11) **EP 3 705 983 A1**
(43) Date of publication of application: **09.09.2020**
(21) Application number: 19161570.7
(22) Date of filing: 08.03.2019
(51) Int. Cl.: G06F 3/01, G06F 3/023, G09B 21/00, G06F 3/02, G09B 21/02

(54) **DEVICE AND METHOD FOR BI-DIRECTIONAL MAN-MACHINE COMMUNICATION**

(71) Applicant: Universität Heidelberg, 69117 Heidelberg (DE)
(72) Inventor: BEHAN, Ciaran, 69117 Heidelberg (DE); GEISLER, Manuel, 69126 Heidelberg (DE); REINER, Marius, 69120 Heidelberg (DE)
(74) Representative: Müller-Boré & Partner Patentanwälte PartG mbB

(57) **Abstract**

The present invention relates to an electronic input/output device for bi-directional man-machine communication comprising: a plurality of haptic zones adapted for receiving tactile input of a user and for generating tactile feedback perceivable by a user; wherein at least a subset of the plurality of haptic zones represents a character of a character encoding pattern, and wherein each one of the character representing haptic zones corresponds to a code element of said character encoding pattern.

## Description

The present disclosure relates to a method for bi-directional man-machine communication and an electronic input/output device suitable for said method.

Bi-directional man-machine communication according to the present invention describes input of information into technical systems, usually achieved via help of buttons, keyboard, mouse, joystick, trackball, light pen or touchscreen, as well as output of information by technical systems, i.e. presentation of electronic information/data to a user, commonly achieved in a visual, auditive and occasionally tactile manner.

As an example, man-machine communication of handheld device such as smartphones is commonly achieved visually, i.e. by presenting information on a touchscreen, and by the user pressing areas of the touchscreen. However, this method is clearly disadvantageous and impractical for the blind or visually impaired. Also, a common method of communication for blind and visually impaired people with handheld devices may include speech recognition software and audio response. However, this method is prone to errors and, in particular, lacks discretion.

Other known methods and devices for man-machine communication include use of Braille keyboards for a computer or a laptop, wherein said Braille keyboards comprise a reduced amount of keys compared to a standard QWERTY keyboard. Additionally, such a keyboard may comprise a "Braille display", which consists of a plurality of movable pins so that they extend out of a surface and represent one or more Braille characters. Said display can be read with one finger similar to reading Braille characters on paper by sensing embossings in the paper. However, these keyboards are expensive and bulky and not convenient for being used with a handheld device such as a smartphone. Also known are wearable devices such as gloves for writing on an electronic device using the Malossi alphabet. However, such gloves are inconvenient, in particular for spontaneous and short-time use, and furthermore require the user to learn the Malossi alphabet.

It is therefore an object of the present invention to provide a method as well as an electronic input/output device suitable for said method, allowing convenient, efficient and discrete non-verbal bi-directional man-machine communication, in particular for the blind and visually impaired.

### Summary of the Invention

One aspect of the present invention relates to an electronic input/output device for bi-directional man-machine communication comprising: a plurality of haptic zones adapted for receiving tactile input of a user and for generating tactile feedback perceivable by a user; wherein at least a subset of the plurality of haptic zones represents a character of a character encoding pattern, and wherein each one of the character representing haptic zones corresponds to a code element of said character encoding pattern. The electronic input/output device according to the invention provides the particular advantage of providing the possibility of receiving tactile input and generating tactile output, particularly in multiple areas of the device and, in particular in correspondence to code elements and/or characters of a character encoding pattern. Furthermore, it provides the possibility of silent and/or discrete communication. In this application, tactile output corresponds to physical phenomena being perceivable by a human, in particular by sense of touch/haptic perception. A character of a character encoding pattern for example corresponds to a letter of the alphabet, a number, a space character, a special character, a glyph, a punctuation mark or a data packet of a protocol.

In a preferred embodiment, wherein one or more, specifically each, haptic zone(s) comprises: a first interface means adapted for receiving tactile input of a user; and a second interface means adapted for generating tactile feedback perceivable by a user.

In other words, each haptic zone can comprise two interface means allowing input and output of information. Preferably, said interface means are arranged in proximity to one another so that input may be received and output may be generated in the same limited area, i.e. the corresponding haptic zone.

Alternatively, one or more, specifically each, haptic zone(s) may comprise one interface means, wherein said one interface means is adapted for receiving tactile input of a user and for generating tactile feedback perceivable by a user. In other words, there is provided exactly one i.e. a single interface means per haptic zone. This is in particular advantageous since this allows reduction of components and size of the device. It is furthermore possible that some haptic zones comprise two or more interface means while some haptic zones comprise one interface means per haptic zone.

In a preferred embodiment, one or more haptic zones comprise two or more interface means, which are provided and/or are electrically connected and/or are electrically driven, so that one or more haptic zones are adapted for simultaneously receiving tactile input of a user and generating tactile feedback perceivable by the user. This advantageously increases efficiency since it allows reading and writing of characters at the same time.

According to a further preferred embodiment, the electronic input/output device comprises six or more haptic zones and wherein the character encoding pattern is ASCII and/or Braille and/or HID. The touch based Braille alphabet is a 3 by 2 binary matrix (Braille cell) encoding up to 62 characters and traditionally written in embossed paper. According to the invention, advantageously, rather than relying on paper a human may read a text relying on the haptic zones corresponding to the code elements of e.g. a Braille pattern, without the necessity to newly memorize a new coding pattern. Similarly, other character encoding patterns such as ASCII and/or HID protocol, using a plurality (e.g. 7 or 8) of binary code elements may be written and/or read with the electronic input/output device. Also, other data packets comprising a plurality of binary code structures may be communicated with the electronic input/output device.

Preferably, the electronic input/output device comprises at least six haptic zones, wherein each of the plurality of haptic zones corresponds to one code element of a six point Braille-cell, which allows writing and/or reading characters according to the Braille transcription code/encoding pattern. Most preferably, the electronic input/output device comprises at least eight haptic zones. This allows input and output of characters according to the eight dot Braille-cell or the eight dot Braille-cell with extra buttons and/or other encoding patterns using binary code elements like ASCII or HID. Generally, the device may be adapted for usage with single-byte, multi-byte and/or unicode character sets and encodings.

In a preferred embodiment of the electronic input/output device, six haptic zones are arranged in accordance to the layout of a Braille cell. This simplifies association between the haptic zones and the corresponding code elements of the character encoding pattern. As an example, the haptic zones are arranged in a 3 by 2 matrix or 4 by 2 matrix.

In a further particular embodiment, one or more of the plurality of haptic zones correspond to a predetermined function and/or a predetermined character of a character encoding pattern. In particular, such a haptic zone may represent functions like "space", "delete", "return", "send message", "confirmation", "caps lock" or the like. Similarly, a certain combination of a plurality of haptic zones may represent such a predetermined function and/or predetermined character.

Preferably, an interface means comprises one of: a piezoelectric, electromechanical, pneumatic, thermal, hydraulic, electrostatic, magnetic or ultrasonic actuator; and/or a piezoelectric, piezoresistive, thermal, electrostatic or magnetic sensor. These and other commonly known transducers can be used as sensors and/or actuators for receiving tactile input of a user and generating tactile feedback. This way, one or more haptic zones may be configured to e.g. replicate the embossings written in paper representing a Braille character. According to a particular preferred embodiment, an interface means comprises a bidirectional transducer suitable for converting physical phenomena to electrical signals and for converting electrical signals into physical phenomena. This allows reduction of space and number of required components.

Advantageously, an interface means is able to receive tactile input and/or generate tactile feedback in the form of pressure/force, motion, vibration, electric charge and/or electric current. Preferably, tactile input is exerted by the user and received/detected by an interface means in the form of pressure, e.g. by applying pressure to the surface of haptic zone by use of a fingertip. Alternatively and/or additionally, temperature change, motion, capacitance change etc. may be detected by one or more interface means. Further preferably, tactile feedback is generated by inducing vibration at and/or proximate to a haptic zone, which can be perceived by the user by way of physical contact between the fingertip of the user and the haptic zone. However, it is to be appreciated that different forms of tactile input and/or tactile feedback according to the preferences or needs of a user are possible. In particular, a combination of vibration and bulging of at least a part of the surface of a haptic zone may provide particular high receptivity of a user for tactile feedback.

According to yet another preferable embodiment tactile output is generated in the form of vibration and, optionally, intensity and/or frequency of said generated vibration is modulated for providing additional feedback to the user. As an example, vibrations generated at haptic zones of a subset of the haptic zones representing a character of a character encoding pattern may vary distinguishably between different persons in a group chat so that the user is able to recognize to what person the currently generated feedback/character is associated with. Additionally and/or alternatively, duration and/or characteristic of the vibration signal, i.e. waveform and/or the pulse shape and/or the slope of a pulse may be varied.

Advantageously, the electronic input/output device further comprises connection means for physically connecting the electronic input/output device to the housing of a handheld device, such that the haptic zones are located on top of a display of the handheld device or on the opposite side of the display of the handheld device. In order to improve convenience for a user, the electronic input/output device preferably has dimensions similar to a smartphone and is adapted for being mounted to the body of a handheld device such as a smartphone. Most preferably, the haptic zones, when the electronic input/output device is mounted to a smartphone, are arranged at the backside of the smartphone, i.e. the side opposite to the primary display of the smartphone, and/or are arranged in such a way that they are accessible from the backside of the smartphone. Other connecting means may be provided for physically connecting the electronic input/output device to different electronic devices such as a laptop computer, a desktop computer, a monitor, a tablet, etc.

According to a preferred embodiment, the electronic input/output device comprises communication means for communicating with other electronic devices such as a handheld device, specifically a smartphone, a desktop computer, a laptop computer, a tablet and/or a boardcomputer of a vehicle. Such communication means may be wireless communication means for communicating e.g. via Bluetooth, Wifi and/or NFC, and/or wired communication means for communication e.g. via USB, Lightning and/or audio jack connector.

Another aspect of the present invention relates to using of an electronic input/output device as described above for bi-directional man-machine communication.

Yet another aspect of the present invention relates to a method for bi-directional man-machine communication to be carried out by a user, comprising the steps of: simultaneously touching a plurality of haptic zones of an electronic input/output device with at least a part of individual fingers, e.g. fingertips; reading a character of a character encoding pattern by perceiving tactile feedback from one or more of the plurality of haptic zones of the electronic input/output device; and/or writing a character of a character encoding pattern by generating tactile input to one or more of the plurality of haptic zones of the electronic device. Alternatively, for writing a character, touching of a plurality of haptic zones may occur sequential and/or according to a certain pattern, e.g. one haptic zone after another. The method may be adapted according to the users preferences and/or abilities. Preferably, the user contacts the surface of the haptic zones with his/her fingertips, similar to contacting a fingerprint-reader and/or contacting keys on a computer keyboard and/or conventionally reading Braille character on a sheet of paper, which, contrary to the concept of the present invention, is achieved by touching and sensing all code elements of a single Braille character substantially simultaneously using a single finger. This is particularly advantageous since this part of the finger comprises a high sense of touch and, thus, allows superior perception of tactile stimuli by the user. The method may be performed by a code or software being implemented on an electronic input/output device as described above and/or by software/an app being installed on an electronic device such as a computer or handheld device, wherein said electronic device may be in communication with an electronic input/output device as described above.

In a preferable implementation of the method, writing a character comprises: generating pressure at one or more of the plurality of haptic zones of the electronic input/output device within a specified time period; and/or releasing pressure generated at one or more of the plurality of haptic zones of the electronic input/output device within a specified time period. Generation of pressure and/or releasing pressure within a time span of less than 1 second, preferably less than 0.5 seconds, preferably less than 0.1 seconds, most preferably substantially simultaneously, may be implemented as confirmation that the intended input of information relating to the currently written character is completed. This approach is particularly advantageous as the speed in which writing characters occurs can be individually determined by the user. Alternatively, generating pressure on one or more of the plurality of haptic zones may occur, substantially simultaneously and/or sequentially, within a longer predetermined time span of e.g. 2 seconds per character.

Alternatively and/or additionally, reading a character may comprise: perceiving tactile feedback at one or more of the plurality of haptic zones of the electronic input/output device. Said tactile feedback may be generated substantially simultaneously and/or sequentially, optionally according to a predetermined sequence.

Preferably the method comprises generation of a predetermined tactile feedback at one or more of the plurality of haptic zones of the electronic input/output device, in particular for indicating completion of a character and/or a word and/or a sentence and/or an abstract, wherein the predetermined tactile feedback does not correspond to a tactile feedback representing a character of the character encoding pattern. This increases efficiency of the reading of characters and words since the user receives information indicating that output of a character/word/sentence/abstract/message has been completed. This function may be achieved in various ways, e.g. by providing feedback substantially simultaneously at a certain combination of some of the haptic zones or all of the haptic zones.

Furthermore, the method preferably comprises substantially simultaneously receiving tactile input of a user and generating tactile feedback perceivable by the user, which increases communication efficiency. For example, this may be achieved by provision of two or more interface means for a single haptic zone, wherein the two or more interface means are suitably electrically connected and/or driven.

The method may also be used for man-to-man communication with one or more electronic input/output devices interfacing between one man and the other man.

In correspondence to what is described with respect to the electronic input/output device, the method may provide different and/or varying tactile feedback to the user, e.g. intensity and/or length of a tactile stimulus. These may be chosen by the user and/or may be dictated based on analyzed reading/writing performance of a user.

The above description of the electronic input/output device equally applies to the use and the method and vice versa. Specifically, one or more elements of one aspect may be isolated from this aspect and be combined with one or more elements of one or more of the other aspects.

The present invention is further explained in detail by the following detailed description and the appended drawings, in which particular embodiments are illustrated by way of example, wherein the present invention is in no way limited by these particular embodiments.

### Brief description of the drawings

- Fig. 1: shows schematics of an exemplary electronic input/output device for bidirectional man-machine communication configured to being mounted to a smartphone;
- Fig. 2: shows an electronic input/output device according to a further example including a plurality of interface means, communication means and a power supply;
- Fig. 3: shows a schematic of the exemplary device shown in Fig. 2;
- Fig. 4: shows a further exemplary electronic input/output device in use comprising a plurality of haptic zones;
- Fig. 5: shows a plurality of interface means and communication means of yet another example of an electronic input/output device;
- Fig. 6: shows a method of man-to-man communication via one or more electronic input/output devices.

### Description of particular embodiments

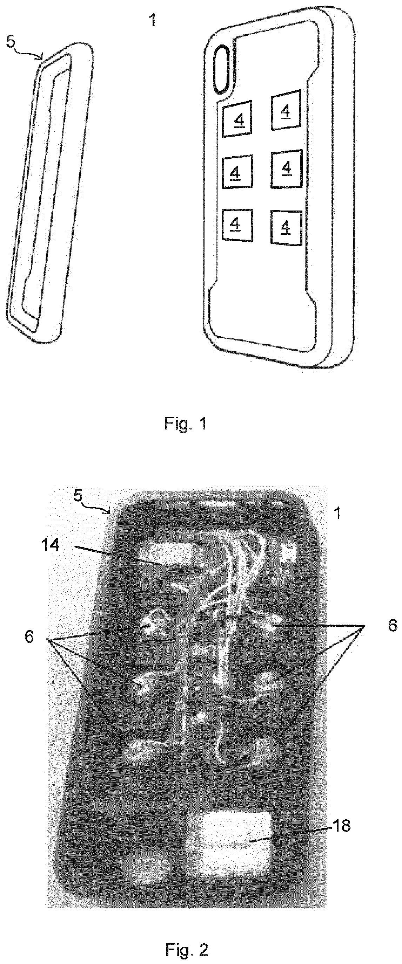

**Fig. 1** shows schematics of a particularly advantageous example of an electronic input/output device 1 for bi-directional man-machine communication, which is configured to being mounted to a handheld device such as a smartphone. The electronic input/output device 1 according to this exemplary embodiment comprises a plurality of, specifically 6, haptic zones 4 adapted for receiving tactile input of a user and for generating tactile feedback perceivable by a user. Said haptic zones 4 are provided in such a manner that they are accessible for a user, i.e. comprising a surface composing at least a part of the outer surface of the body of the electronic input/output device 1. In this embodiment, the haptic zones 4 are arranged in a 3x2 matrix pattern on a surface of the electronic input/output device 1. The arrangement of the haptic zones 4 shown in Fig. 1 is particularly advantageous since it replicates the layout of the code elements of a six point Braille cell. Consequently, a user is able to more easily allocate each haptic zone 4 to a corresponding code element of such a six point Braille cell. As an example, the haptic zone 4 being positioned in the top left corner could correspond to the equivalent (first) code element of the Braille cell, the haptic zone positioned in the middle on the left side corresponds to the equivalent (second) code element of the Braille cell, etc. Hence, due to the shown arrangement of the haptic zones 4, the user may more easily associate each haptic zone 4 with the layout of the Braille cell. It is to be appreciated that the specific arrangement and number of haptic zones 4 shown in Fig. 1 is merely a particular preferably embedment of the electronic input/output device 1 of the present invention, in particular advantageous for writing and/or reading six-element Braille characters. Different arrangements and numbers are possible in accordance to different uses and specifications, in particular different character encoding patterns, e.g. eight dot Braille, ASCII, HID and/or other binary codes.

According to this exemplary embodiment, the electronic input/output device 1 comprises connection means 5 for physically connecting the electronic input/output device 1 to e.g. a smartphone. Advantageously, connections means 5 are configured to at least partially cover one or more faces of a handheld device. Most preferably, connection means 5 of the electronic input/output device 1 at least partially enclose the backside and one or more side faces of a smartphone, similar to commonly used smartphone covers. Connection means 5 preferably comprise substantially elastic elements, e.g. comprise and/or consist of thermoplastic elastomers like polyurethane (PU), polyvinyl chloride (PVC), polyethylene (PE) and/or Polypropylene (PP). This is particularly advantageous as this allows easy and reliable mounting of the electronic input/output device 1 to the handheld device, specifically the smartphone. However, alternatively and/or additionally, connection means 5 may comprise and/or consist of clamps, brackets, adhesives and other elements suitable for mounting/attaching the electronic input/output device 1 to another device, specifically a handheld device such as a smartphone. Also, connection means 5 may be suitable for physically connecting, specifically physically attaching, the electronic input/output device 1 to other devices such as a laptop computer, a tablet, a computer keyboard or the like.

**Fig. 2** shows an electronic input/output device 1 according to a further exemplary embodiment of the invention. The electronic input/output device 1, similar to the electronic input/output device 1 of Fig. 1, comprises a plurality of, specifically six, haptic zones 4 (not shown) provided on the back side of the illustrated electronic input/output device 1. Also, connection means 5 are provided for mounting the electronic input/output device 1 to a smartphone. The electronic input/output device 1 may comprise a plurality of interface means 6, provided in such a manner that they contact and/or are positioned in close proximity to the plurality of haptic zones 4 so as to be able to receive/detect tactile input of a user to an associated haptic zone 4 and/or generate tactile feedback perceivable by a user through/at an associated haptic zone 4. According to a preferred embodiment of the electronic input/output device 1, a single interface means 6 is provided for each haptic zone 4, wherein said interface means 6 is adapted for receiving tactile input and for generating tactile feedback associated with a specific haptic zone 4. Alternatively and/or additionally, two or more interface means 6 may be provided at some or at each of the haptic zones 4. In such a case, by way of example, interface means 6 may each be adapted for either receiving tactile input or generating tactile feedback.

Preferably, one or more of the interface means 6 are able to receive tactile input and/or generate tactile feedback in the form of pressure, motion, vibration, electric charge, electric current and/or similar forms. In this respect, it is to be appreciated that different interface means 6, adapted for receiving input and/or generating feedback in different forms, may be provided in a single electronic input/output device 1. Interface means 6 suitable for an electronic input/output device 1 of the present invention may, for example, comprise one or more of a piezoelectric, electromechanical, pneumatic, hydraulic, electrostatic, magnetic or ultrasonic actuator for generating tactile feedback/output. As an alternative and/or in addition, interface means 6 may, for example, comprise one or more of a piezoelectric, piezoresistive, electrostatic or magnetic sensor for receiving, specifically for detecting, tactile input of a user. It is to be appreciated that other actuators and/or sensors known in the art may be provided as interface means 6. In a particular advantageous and preferable embodiment, an interface means 6 comprises a single piezoelectric element adapted for receiving tactile input as well as generating tactile feedback perceivable by a user. As is known in the art, a piezoelectric element may convert pressure acting on the piezoelectric element into electric charge, which can, for example, be detected by a measurement device as voltage change. Accordingly, a piezoelectric element may bulge and/or vibrate when voltage is applied to it. Thus, a piezoelectric element furthermore allows generating different feedbacks such as vibration, motion and/or ultrasound. Moreover, advantageously, interface means 6 corresponding to a certain haptic zone 4 may be mechanically and/or electrostatically decoupled from interface means 6 of other haptic zones 4 so as to avoid interferences between different haptic zones 4 and/or interface means 6 of different haptic zones 4.

According to the particular embodiment shown in Fig. 2 and described above, an electronic input/output device 1 may comprise communication means 14 for communicating with an electronic device such as a smartphone, laptop computer, desktop computer and the like. Such communication means 14 may be adapted for wireless communication and/or wired communication. As an example, such communication means 14 may be configured for wireless transmission of information via commonly known methods and protocols such as Bluetooth, Wifi, NFC or the like. Alternatively and/or additionally, such communication means 14 may be adapted for communication via USB, Lightning, audio jack connector and the like. Furthermore, the electronic input/output device 1 may comprise a power supply 18 and/or electronic circuitry such as a microprocessor for controlling and/or driving interface means 4 and/or communication means 14.

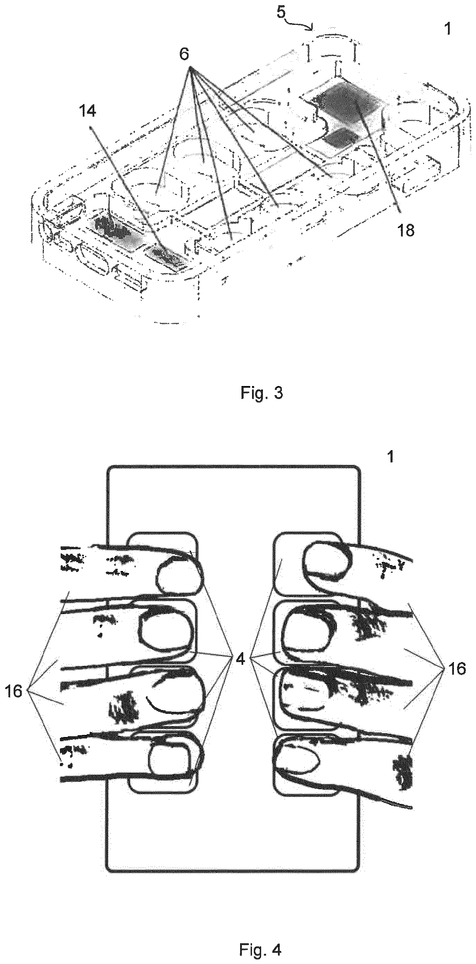

**Fig. 3** shows a schematic of the exemplary electronic input/output device 1 shown in Fig. 2 comprising a plurality of haptic zones 4 and interface means 6. Furthermore, communication means 14, a power supply 18 and connection means 5 are provided. As outlined above, this embodiment is particularly suitable for being used in combination with a handheld device such as a smartphone.

In contrast to the exemplary embodiments shown in Figs. 1-3, the embodiment shown in **Fig. 4** shows another particularly preferable electronic input/output device 1 according to the invention, wherein the electronic input/output device 1 is a stand-alone device, not explicitly configured to be mounted to another device. However, it is appreciated that connection means 5 may be provided for physically connecting and/or attaching and/or mounting the electronic input/output device 1 to another device and/or structure. The shown electronic input/output device 1 comprises a plurality, specifically eight, haptic zones 4. Preferably, said eight haptic zones 4 are provided in a layout in accordance to a 4x2 matrix. This layout is particularly suitable for writing and/or reading character encoding patterns such as eight dot Braille, ASCII and/or HID. Alternatively and/or in addition, six dot Braille may be written/read using a subset of six haptic zones with additional haptic zones 4 provided, which e.g. may be associated with a certain predetermined command and/or function and/or character. Optionally, the illustrated and other embodiments of the present invention may comprise additional haptic zones 4, which may be arranged on the same side or one or more different sides of the electronic input/output device 1. Thereby dedicated functionality can be provided, similar to having a specific button.

The haptic zones 4, according to this and other embodiments of the invention, may be distinguishable from one another, preferably by touch, e.g. by provision of structural elements provided between adjacent haptic zones 4 such as e.g. a ridge and/or a recess. Additionally and/or alternatively, one or more of the haptic zones 4 may comprise a surface distinguishable from the surface of the electronic input/output device surrounding the haptic zone(s) 4. According to a particular advantageous example, one or more of the haptic zones 4 comprise a surface with one or more of tactile properties such as softness, roughness and the like, in order to enhance haptic perception and/or experience of the user. Alternatively and/or in addition, one or more haptic zones 4 may comprise a material and/or one or more structures enhancing transmission of input exerted by a user and/or output/feedback generated by the electronic input/output device 1. As an example, silicone or rubber-like materials may be provided for enhancing perception of vibrations generated as feedback for perception by the user. As another example, capacitive coupling may be enhanced by the use of glass.

As illustrated in Fig. 4, one or more of the haptic zones 4 are preferably arranged such that they are easily and/or intuitively accessible by one or more fingertips of a finger 16 of a user, preferably simultaneously. This is in particular advantageous since the finger tips possess high tactile sensitivity. Also, blind and visually impaired people are used to sensing e.g. Braille characters using their fingertips, which reduces learning time regarding perception of the tactile feedback provided by the electronic input/output device 1.

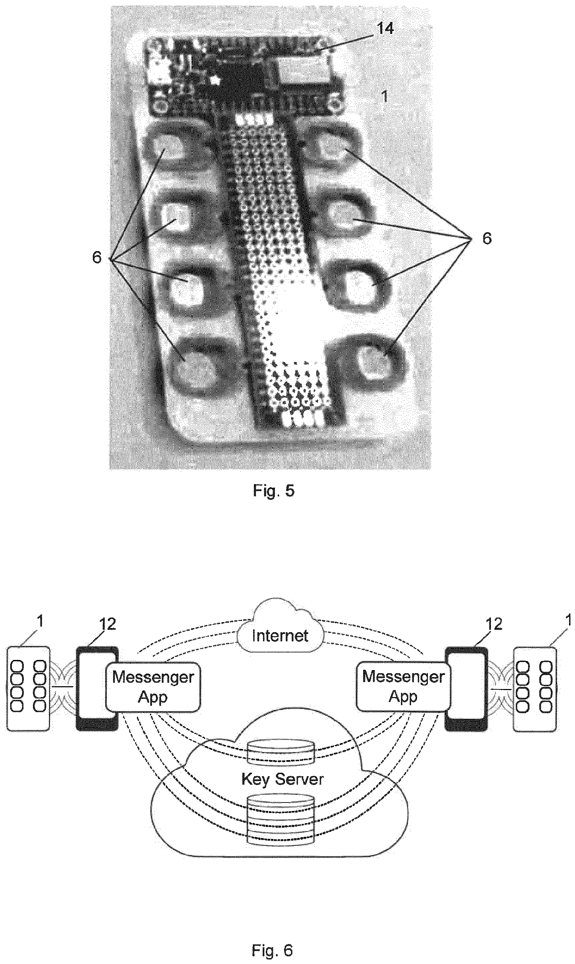

**Fig. 5** shows interface means 6 and communication means 14 for an electronic input/output device 1 e.g. as shown in Fig. 4. In this particular embodiment, one or more of the interface means 6 are embedded in a rubber-like material, which enhances transmission of generated feedback to the user and/or prevents interference between interface means 6 associated with different haptic zones 4. Also, size and arrangement of the interface means 6 and haptic zones 4 (not shown) correspond to the embodiment of Fig. 4. Specifically, the haptic zones 4 and/or the interface means 6 are arranged in the particular advantageous arrangement in a 4x2 matrix, in correspondence to an eight dot Braille cell. Furthermore, interface means 6 and communication means 14 are dimensioned in such a way that they may be integrated into an electronic input/output device 1, which is substantially according to the size of a handheld device such as a smartphone.

**Fig. 6** illustrates a method of man-to-man communication via one or more electronic input/output devices 1. One or more of the electronic input/output devices 1 may communicate with an electronic device, specifically a handheld device 12 such as a smartphone. The handheld device 12, specifically a smartphone, may include an application/software, which translates/converts the input of the user received by the electronic input/output device 1 into a binary code for further processing, e.g. for writing messages using text-based messenger apps, for storing and the like. Alternatively and/or additionally, the translation, specifically the conversion, of input of the user into a form usable for further processing may be achieved by suitable components such as a microprocessor and/or respective software/algorithms provided in the electronic input/output device 1. The message may be transmitted, e.g. via internet, to an electronic device, specifically a handheld device 12 such as a smartphone, of the recipient and presented to the recipient. Optionally, an electronic input/output device 1 may be in communication with the electronic device of the recipient, wherein the message may be provided to the user in a character encoding pattern as outlined above by the electronic input/output device 1 of the recipient. Of course, the described communication method may be adapted accordingly for man-to-man communication of different electronic devices and ways of input and/or output of information, e.g. visually, auditory etc.

Moreover, it is to be appreciated that a single device may be used for man-to-man communication, e.g. by writing a character and/or sentence and/or message by a user with an electronic input/output device 1, which is stored in a memory and which, after the electronic input/output device 1 is handed over to the recipient, is being provided to the recipient via generated feedback/output by the same electronic input/output device 1. This way, there is no need for a further electronic device. Alternatively, two or more electronic input/output devices 1 may communicate directly with each other by wireless and/or wired communication means 14.

It should be understood that embodiments discussed in the description and shown in the drawings only constitute illustrative exemplary embodiments of the present invention. In light of the present disclosure the person skilled in the art is offered a wide range of possible variations and combinations of individual features.

In particular, it is to be appreciated, that one or more of the plurality of haptic zones 4 may be provided on different faces of an electronic input/output device 1, e.g. for improved user convenience. Also, dimension and/or orientation of haptic zones 4 may vary, e.g. for achieving an enhanced ergonomic design of the electronic input/output device 1. Moreover, sensitivity and/or accuracy of interface means 6 may vary, e.g. depending on which finger of the user shall be associated with the corresponding haptic zone 4. As an example, a user might considerably differently generate tactile input with the little finger compared to the index finger. Such a difference may be compensated by hardware and/or software adjustments.

Furthermore, it is to be appreciated that one or more elements of the above described exemplary and preferably embodiments may be isolated from these embodiments and be combined with one or more elements of one or more of the other embodiments.

### List of Reference Numerals

- 1: electronic input/output device
- 4: haptic zone
- 5: connection means
- 6: interface means
- 12: handheld device
- 14: communication means
- 16: finger of a user
- 18: power supply

## Claims

1. An electronic input/output device (1) for bi-directional man-machine communication comprising:
a plurality of haptic zones (4) adapted for receiving tactile input of a user and for generating tactile feedback perceivable by a user;
wherein at least a subset of the plurality of haptic zones (4) represents a character of a character encoding pattern, and
wherein each one of the character representing haptic zones (4) corresponds to a code element of said character encoding pattern.

2. Electronic input/output device (1) of claim 1, wherein each haptic zone (4) comprises:
a first interface means (6) adapted for receiving tactile input of a user; and
a second interface means (6) adapted for generating tactile feedback perceivable by a user.

3. Electronic input/output device (1) of claim 1, wherein each haptic zone (4) comprises:
a single interface means (6), wherein said one interface means (6) is adapted for receiving tactile input of a user and for generating tactile feedback perceivable by a user.

4. Electronic input/output device (1) of any one of the preceding claims, wherein the electronic input/output device (1) comprises six or more haptic zones (4) and wherein the character encoding pattern is ASCII and/or Braille and/or HID protocol.

5. Electronic input/output device (1) of any one of the preceding claims, wherein six haptic zones (4) are arranged in accordance to the layout of a braille cell.

6. Electronic input/output device (1) of any one of the preceding claims, wherein one or more of the plurality of haptic zones (4) corresponds to a predetermined function.

7. Electronic input/output device (1) of any one of the preceding claims, wherein an interface means (6) comprises one of:
a piezoelectric, electromechanical, pneumatic, hydraulic, electrostatic, magnetic or ultrasonic actuator; and/or
a piezoelectric, piezoresistive, electrostatic or magnetic sensor.

8. Electronic input/output device (1) of any one of the preceding claims, wherein
an interface means (6) is able to receive tactile input and/or generate tactile feedback in the form of pressure, motion, vibration, electric charge and/or electric current; and optionally/or
tactile output is generated in the form of vibration and, optionally, wherein intensity and/or frequency of said generated vibration is modulated for providing additional feedback to the user.

9. Electronic input/output device (1) of any one of the preceding claims, further comprising connection means (5) for physically connecting the electronic input/output device (1) to the housing of a handheld device (12) such that the haptic zones (4) are located ontop of the display of the handheld device (12) or on the opposite side of the display of the handheld device (12).

10. Electronic input/output device (1) of any one of the preceding claims, further comprising communication means (14) for communicating with a handheld device (12), in particular:
wireless communication means for communicating via Bluetooth, Wifi and/or NFC, and/or
wired communication means for communication via USB, Lightning and/or audio jack connector.

11. Use of an electronic input/output device (1) according to any one of claims 1-10 for bi-directional man-machine communication.

12. Method for bi-directional man-machine communication to be carried out by a user, comprising the steps of:
simultaneously touching a plurality of haptic zones (4) of an electronic input/output device (1) with at least a part of individual fingers (16);
reading a character of a character encoding pattern by perceiving tactile feedback from one or more of the plurality of haptic zones (4) of the electronic input/output device (1); and/or
writing a character of a character encoding pattern by generating tactile input to one or more of the plurality of haptic zones (4) of the electronic device (1).

13. Method of claim 12, wherein writing a character comprises:
generating pressure at one or more of the plurality of haptic zones (4) of the electronic input/output device (1) within a specified time period; and/or
releasing pressure generated at one or more of the plurality of haptic zones (4) of the electronic input/output device (1) within a specified time period.

14. Method of any one of claims 12 to 13, wherein reading a character comprises:
perceiving tactile feedback at one or more of the plurality of haptic zones (4) of the electronic input/output device (1).

15. Method of any one of claims 12 to 14, wherein a predetermined tactile feedback is generated at one or more of the plurality of haptic zones (4) of the electronic input/output device (1), in particular for indicating completion of a character and/or a word and/or a sentence and/or an abstract.
